(19) **Europäisches Patentamt / European Patent Office / Office européen des brevets**

(11) **EP 1 246 674 B1**

(12) **EUROPEAN PATENT SPECIFICATION**

(45) Date of publication and mention
of the grant of the patent:
**20.10.2010 Bulletin 2010/42**

(21) Application number: **01900723.6**

(22) Date of filing: **12.01.2001**

(51) Int Cl.:
**A63F 13/10** *(2006.01)*

(86) International application number:
**PCT/JP2001/000151**

(87) International publication number:
**WO 2001/051152 (19.07.2001 Gazette 2001/29)**

(54) **RECORDING MEDIUM, METHOD AND COMPUTER FOR EXECUTING A SHOOTING GAME IN AN ENTERTAINMENT SYSTEM**

AUFZEICHNUNGSMEDIUM, VERFAHREN UND RECHNER ZUR DURCHFÜHRUNG EINES SCHIESSPIELS IN EINEM UNTERHALTUNGSSYSTEM

SUPPORT D'ENREGISTREMENT, PROCEDE ET ORDINATEUR POUR EXECUTER UN JEU DE TIR DANS UN SYSTEME DE DIVERTISSEMENT

(84) Designated Contracting States:
**DE GB**

(30) Priority: **14.01.2000 JP 2000040270**

(43) Date of publication of application:
**09.10.2002 Bulletin 2002/41**

(73) Proprietor: **Sony Computer Entertainment Inc.**
**Tokyo 107-0052 (JP)**

(72) Inventor: **KOMATA, Nobuhiro**
**Minato-ku,**
**Tokyo 107-0052 (JP)**

(74) Representative: **DeVile, Jonathan Mark**
**D Young & Co LLP**
**120 Holborn**
**London EC1N 2DY (GB)**

(56) References cited:
EP-A- 0 852 961    EP-A- 0 952 555
US-A- 5 299 810    US-A- 5 853 324

EP 1 246 674 B1

## Description

## FIELD OF THE INVENTION

This invention relates to a recording medium, a method using a pressure-sensitive controller, and a computer for executing a shooting game.

## BACKGROUND OF THE INVENTION

Among computer games, a "shooting game" is one in which the player, via a controller, shoots projectiles from objects in a game space to hit enemies, etc., and competes with another player or a computer to gain points based on his hit rate, the damage he inflicts on the enemies, etc.

Generally in such a game, an arbitrary button on the controller of the computer is assigned as a trigger switch, and every time it is pressed by a user, a projectile is shot.

In order to play the game dominantly, it is necessary to twitch one's finger in a quick vibration to shoot off many projectiles per unit time, turning the switch on and off many times during a short period of time. Because of differences from one individual to another, recently controllers have become available that have a switch dedicated to a rapid-fire operation, or software used may cause a predetermined switch on the controller to function as a rapid-fire switch.

Such switches make it simple to shoot rapidly, even for someone who does not have the skill to execute a rapid-fire barrage by twitching his finger in rapid succession.

As prior art for shooting games, one can refer to Japanese unexamined patent Laid-open Nos. H11-04743 [1999], H11-047448 [1999], H11-052898 [1999], H11-053082 [1999], and H11-053571 [1999]. As prior art for rapid-fire buttons, one can refer to Japanese unexamined patent Laid-open No. H11-076615 [1999].

Meanwhile, for computer input devices, mainly for the input devices of entertainment systems typified by game devices, there is a so-called pressure-sensitive controller. The pressure-sensitive controller outputs as a pressure sensing value a pressing force that results when a player applies pressure with his or her finger to an operation element itself that is connected to a pressure-sensitive element. As a specific example, a pressure-sensitive controller is disclosed in, for example, Japanese utility model Publication H 1-40545 [1989], but here the pressure sensing output is input to a variable control oscillator (VCO), and the output of the VCO is used for rapid firing in the game.

However, in shooting games as described above, putting or allocating a rapid-fire button on the controller brings everyone to the same level, which presents the problem that rapid firing that reflects the skill of the player cannot be realized, ultimately detracting from the character of the game.

An image processing unit for a shooting game is described in EP-A-0 952 555 and is provided with an input device in the form of a pistol. Pistol firing, the location of hits, the number of rounds fired, and the like are determined based on the scanning spot detection signals from the pistol, the trigger signals indicating that the pistol trigger has been pulled, the current co-ordinate position of the scanning electron beam on the TV monitor, and the position of the target.

A variable conductance sensor is described in US-A-5,999,084 which generates an output signal having a magnitude dependent on the pressure exerted on the sensor. The variable conductance sensor provides tactile feedback dependent on the pressure exerted and can be used for a controller for a computer.

## SUMMARY OF THE INVENTION

Respective aspects and features of the present invention are defined in the claims.

Embodiments of the present invention seek to provide a recording medium, a method using the controller and a computer for executing a shooting game, which enhance the character of the game, without eliminating the rapid-fire function.

This may be obtained by providing a recording medium on which are recorded shooting game software programs, including programs that process as commands an output from a controller that has a pressure sensing means, that can be read and executed by a computer, and the software programs include processing programs that shoot projectiles in the screen of the computer in a number that corresponds to the output of the controller.

## SUMMARY OF THE INVENTION

Respective aspects and features of the present invention are defined in the claims.

Embodiments of the present invention seek to provide a recording medium, a method using the controller and a computer for executing a shooting game, which enhance the character of the game, without eliminating the rapid-fire function. Such an approach can be used in shooting game software programs, including programs that process as commands an output from a controller that has a pressure sensing means, that can be read and executed by a computer, and the software programs include processing programs that shoot projectiles in the screen of the computer in a number that corresponds to the output of the controller.

## BRIEF DESCRIPTION OF THE DRAWINGS

Figure 1 is a diagram showing a connection of the controller to the entertainment system to enable a player to enjoy game software or images using the entertainment system;

Figure 2 is a diagram showing a scene in which, in a shooting game, projectiles G are fired at enemy characters according to operation by the player, and a projectile strikes;

Figure 3 is a table for selecting the number of projectiles to be shot per unit time according to a respective pressure sensing value;

Figure 4 is a flowchart of processing a shooting game, including a program for projectile shooting;

Figure 5 is a perspective view of the controller connected to the entertainment system;

Figure 6 is a block diagram of the entertainment system;

Figure 7 is a top plan view showing the appearance of the controller;

Figure 8 is an exploded perspective view of the second control part of the controller;

Figure 9A-9C are cross-sectional views of the second control part of Fig. 8;

Figure 10 is a diagram showing the equivalent circuit of the pressure sensing circuit element;

Figure 11 is a block diagram of the main parts of the controller;

Figure 12 is an exploded perspective view of the first control part of the controller;

Figure 13 is a cross-sectional view of the first control part of Fig. 12;

Figure 14 is a diagram showing the circuit of the resistor;

Figure 15 is a graph the characteristics of the output signal of the controller;

Figure 16 is a block diagram showing the overall composition, including the resistor; and

Figure 17 is an exploded perspective view of the third control part of the controller.

## DETAILED DESCRIPTION OF THE PREFERRED EMBODIMENT

With a controller that uses pressure-sensitive elements, when a button, which is an operation element, is pressed by a player, the controller not only detects the presence or absence of its pressure sensing output, for example, whether the switch is on or off, but also obtains a pressure sensing value outputted in accordance with the pushing pressure of the player. Meanwhile, in the software or game that makes use of pressure sensing value output, processing or action can be decided upon in correspondence with the pressure sensing value output. This embodiment has been made in such a way that even if, for example, projectiles are shot on the screen according to operation of the operation elements, the speed of the shooting varies according to the pressure sensing value due to the pushing operation on each operation element.

That is, in this embodiment, in software for firing projectiles according to operations as in a so-called shooting game, projectiles are shot as images on the screen at a speed corresponding to the pressure sensing value output when a controller is operated that has a pressure sensing element by a user. This provides a user interface than is even better than one in which the on operation of a simple on-off switch is repeated or continued.

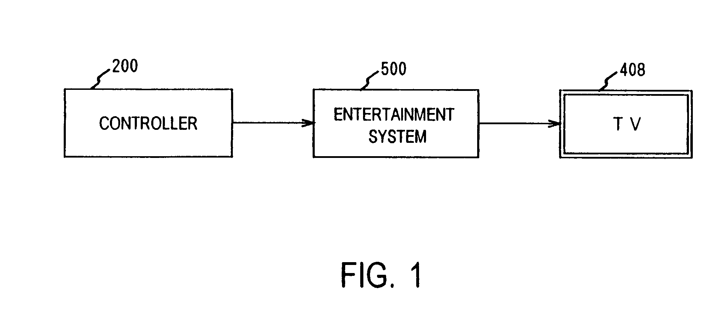

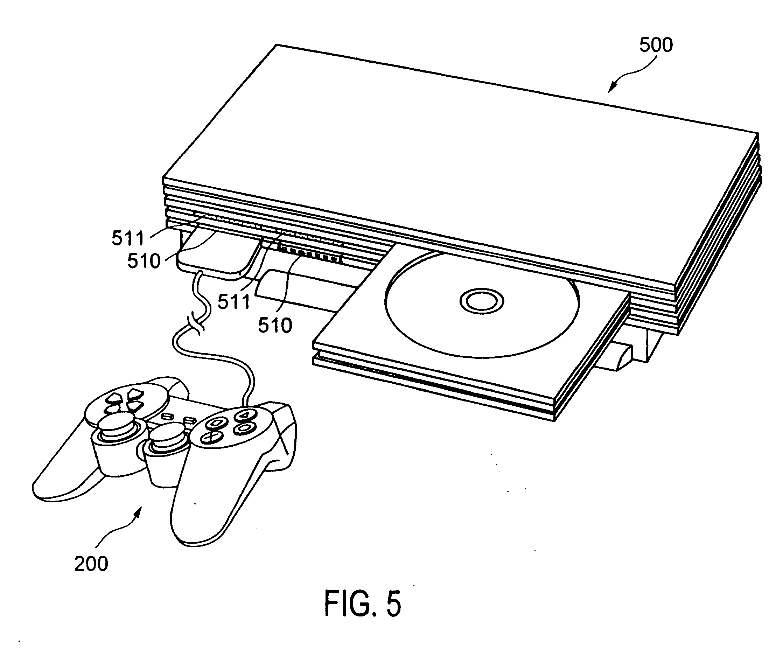

Figure 1 is a diagram for showing a connection of a controller to an entertainment system 500 to enable a user to enjoy game software or images using entertainment system 500. A more specific structure is shown in Figure 5.

As shown in Figure 1, a controller 200, which has buttons connected to pressure sensing elements provided inside the controller is, for example connected to entertainment system 500 for playing games or enjoying the images on a DVD video, etc., and the image output terminal of the entertainment system 500 is connected to television monitor 408. Here, the analog output from the pressure sensing elements is converted to digital values from 0 to 255 by an analog-to-digital converter and is supplied to entertainment system 500.

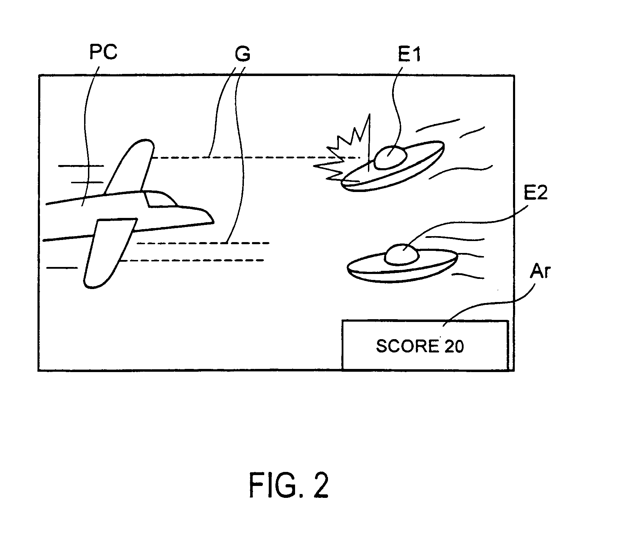

With reference to Figures 2-4, the case in which projectiles are fired on the screen by operation of controller 200 will be now described.

Figure 2 shows a scene in which, in a shooting game, projectiles G are fired at enemy characters E 1, E2 according to operation by the player from a player character PC operated by the player, and a projectile G strikes enemy character E1.

In such a shooting game, every time a projectile hits enemy characters E1, E2, the prescribed number of points are awarded and are added to the player's score. Area "Ar" in the lower right corner of the screen is the score area; in this example, it is shown that the player's score at the present time is 20 points.

In shooting games heretofore, in order to fire projectiles in rapid succession it has been necessary to repeatedly hit a button by hand or to have a rapid-fire button that makes use of a variable control oscillator. In order to fire in succession, one must repeatedly press a button. And if one uses a controller that has a switch just for firing in rapid succession, then no matter how a player manipulates the controls, the number of projectiles shot off per unit time remains constant, thereby not reflecting the degree of learning and skill the player has acquired and greatly detracting from the experience as a competitive game.

In this embodiment the shooting of projectiles is automatically done at a speed that depends on the pressure sensing value from the pressure-sensitive controller.

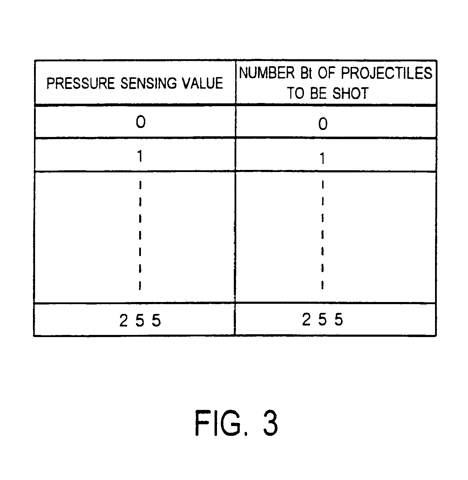

Shown in Figure 3 is a table for selecting the number Bt of projectiles to be shot per unit time according to each pressure sensing value from 0 to 255. Of course, this table is only an example; one can use any table in which the number Bt of projectiles is set in association with the pressure sensing value of the controller.

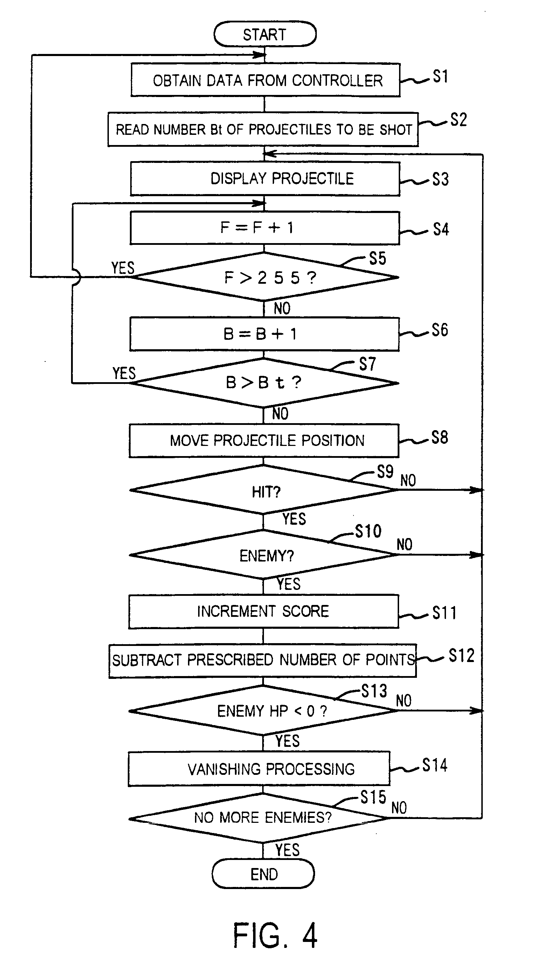

Next, referring to Figure 4, the method by which projectiles are fired off at a speed that depends on the pressure sensing value will be explained. The flowchart in Figure 4 shows the shooting game processing, including the program for shooting projectiles.

In Figure 4, in step S1, the pressure sensing value from controller 200 is obtained, and in step S2, reference is made to the table shown in Figure 3 to read the number Bt of projectiles to be shot that corresponds to the acquired pressure sensing value.

In step S3, the projectiles are displayed. That is, an image of projectile G as shown in Figure 2 is written into the video memory that corresponds to the front of player character PC. An image of one frame into which the image of projectile G is newly written is displayed on television monitor 408.

In step S4, the number F of frames is incremented by 1, and in step S5, it is decided whether the number F of frames is greater than 255; if "YES", the processing returns to step S1, and if "NO", the processing proceeds to step S6.

The reason why the maximum value of the number of frames is taken to be 255 is that, as shown in Figure 3, one cycle for acquiring the pressure sensing value and shooting projectiles in accordance with that value is set to 255 frames. This is because the maximum number of shots per unit time is set to 255. This is because, in this case, if one cycle should be made shorter than 255 frames, then two or more projectiles would have to be fired per frame. In order to avoid making the processing complicated, it is desirable to have no more than one shot per frame.

In step S6, the number B of projectiles is incremented by 1, and in step S7, it is decided whether the number B of projectiles is greater than the number Bt of projectiles to be shot that is read from the table. In the "YES" case, when the number B of projectiles is greater than the number Bt of projectiles to be shot, the processing returns to step S4, and if on the other hand the answer is "NO", the processing proceeds to step S8.

Having these steps S6, S7 prevents projectiles G from being shot off in a number greater than the number Bt of projectiles to be shot that is read from the table based on the pressure sensing value.

In step S8, the position information for all the projectiles G that have been written into the video memory is incremented, that is, their addresses are incremented by the prescribed amount. This prescribed amount is preset, for example, M addresses in N frames.

In step S9, it is decided whether projectile G has hit anything; if "YES", the processing proceeds to step S10, and if "NO", it returns to step S3.

In step S 10, it is decided whether what has been hit is an enemy; if "YES", the processing proceeds to step S11, and if "NO", it returns to step S3.

In step S11, since the projectile has struck an enemy, the score is incremented. The updated score is displayed, for example, in area Ar for displaying the score, as shown with reference to Figure 2.

In step S12, the prescribed number of points are subtracted from the HP, that is, the life value, of the enemy struck by projectile G.

In step S 13, it is decided whether the life value HP value of the enemy that has been decremented by the prescribed number of points in step S12 is less than 0; if "YES", processing proceeds to step S 14, and if "NO", it returns to step S3.

In step S 14, a flag is set so as not to display, when drawn the next time, the enemy whose life value HP value has vanished.

In step S 15, it is decided whether there are any enemies who have not been eliminated; if "YES", the processing returns to step S3, and if "NO", the program ends.

As described above, in this embodiment, projectiles are shot at a speed that depends on the pressure sensing value, so the number of projectiles shot can be regulated by increasing or decreasing the operation pressure. That is, if a player presses the buttons connected to the controller's pressure sensing means with full force, the number of projectiles shot per unit time and the probability of making a direct hit on an enemy is also decreased, but, on the other hand, one player's character on the screen rapidly uses up one's ammunition and runs out of it.

Conversely, if a player presses the buttons connected to the controller's pressure sensing means lightly, the number of projectiles shot per unit time are decreased and the probability of making a direct hit on an enemy is also decreased, but, on the other hand, the player's character on the screen retains its ammunition for a long time.

In this way, the outcome of the game is controlled by the degree of subtle pushing pressure by the player or user on the buttons connected to the controller's pressure sensing means. That is, the elements of how well a user has learned the game and how skillfully the user plays it are reflected in the outcome of the game, whose nature as a game can be enhanced.

This invention makes it possible to improve the user interface, making it easier to use than the conventional rapid firing by a simple on-off switch, and more game-like than using a special rapid-fire switch.

A user may also determine the rate of change between the pressure sensing value last time and the pressure sensing value currently, and shoot projectiles to an extent that corresponds to this rate of change. For example, if the last-time pressure sensing value is 100 and the current pressure sensing value is 50, the rate of change is 50%, so the number Bt of projectiles can be made 1/2 the number of frames the previous time.

Also, in the reverse of the table shown in Figure 3, one may have a table in which large numbers Bt of projectiles are associated with low pressure sensing values, so that the higher the pressure sensing value, the small the number Bt of projectiles.

Fig. 5 is a diagram showing the controller 200 connected to entertainment system 500. The controller 200 is removably connected to the entertainment system 500, and the entertainment system 500 is connected to television monitor 408 as described above.

The entertainment system 500 reads the program for a computer game from recording media upon which that program is recorded and by executing the program displays characters on the television monitor 408. The entertainment system 500 has also various built-in functions for DVD (Digital Versatile Disc) playback, CDDA (compact disc digital audio) playback and the like. The signals from the controller 200 are also processed as one of the aforementioned control functions within the entertainment system 500, and the content thereof may be reflected in the movement of characters and the like, on the television monitor 408.

While this depends also on the content of the computer game program, controller 200 may be allocated functions for moving the characters displayed on the television monitor 408 in the directions up, down, left or right.

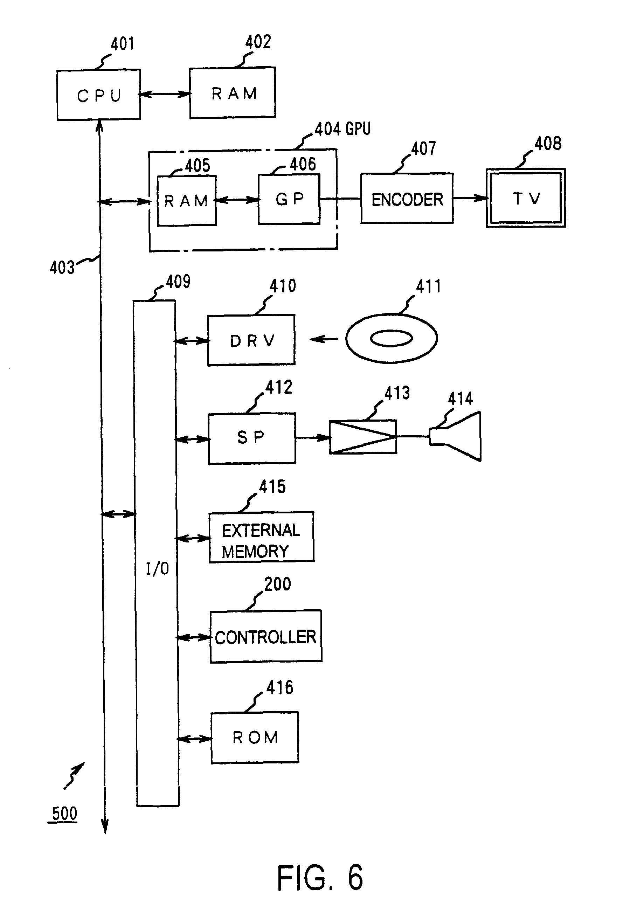

With reference to Fig. 6, here follows a description of the interior of the entertainment system 500 shown in Fig. 5. Fig. 6 is a block diagram of the entertainment system 500.

A CPU 401 is connected to RAM 402 and a bus 403, respectively. Connected to bus 403 are a graphics processor unit (GPU) 404 and an input/output processor (I/O) 409, respectively. The GPU 404 is connected via an encoder 407 for converting a digital RGB signal or the like into the NTSC standard television format, for example, to a television monitor (TV) 408 as a peripheral.

Connected to the I/O 409 are a driver (DRV) 410 used for the playback and decoding of data recorded upon an optical disc 411, a sound processor (SP) 412, an external memory 415 consisting of flash memory, controller 200 and a ROM 416 which records the operating system and the like. The SP 412 is connected via an amplifier 413 to a speaker 414 as a peripheral.

Here, the external memory 415 may be a card-type memory consisting of a CPU or a gate array and flash memory, which is removably connected via connector 511 to the entertainment system 500 shown in Fig. 5.

The controller 200 is configured such that, when a plurality of buttons provided thereupon are pushed, it gives instructions to the entertainment system 500. In addition, the driver 410 is provided with a decoder for decoding images encoded based upon the MPEG standard.

The description will be made now as to how the images will be displayed on the television monitor 408 based on the operation of controller 200. It is assumed that data for objects consisting of polygon vertex data, texture data and the like recorded on the optical disc 411 is read by the driver 410 and stored in the RAM 402 of the CPU 401.

When instructions from the player via controller 200 are provided as an input to the entertainment system 500, the CPU 401 calculates the three-dimensional position and orientation of objects with respect to the point of view based on these instructions. Thereby, the polygon vertex data for objects defined by X, Y, Z coordinate values are modified variously. The modified polygon vertex data is subjected to perspective conversion processing and converted into two-dimensional coordinate data.

The regions specified by two-dimensional coordinates are so-called polygons, the converted coordinate data, Z data and texture data are supplied to the GPU 404. Based on this converted coordinate data, Z data and texture data, the GPU 404 performs the drawing process by writing texture data sequentially into the RAM 405. One frame of image data upon which the drawing process is completed, is encoded by the encoder 407 and then supplied to the television monitor 408 and displayed on its screen as an image.

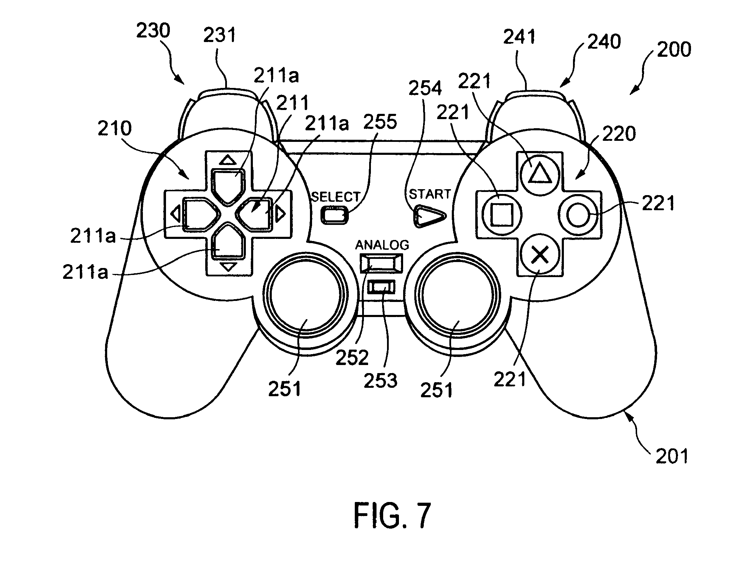

Fig. 7 is a top view of controller 200. The controller 200 consists of a unit body 201 on the top surface of which are provided first and second control parts 210 and 220, and on the side surface of which are provided third and fourth control parts 230 and 240 of the controller 200.

The first control part 210 of the controller is provided with a cruciform control unit 211 used for pushing control, and the individual control keys 211 a extending in each of the four directions of the control unit 211 form a control element. The first control part 210 is the control part for providing movement to the characters displayed on the screen of the television receiver, and has the functions for moving the characters in the up, down, left and right directions by pressing the individual control keys 211 a of the cruciform control unit 211.

The second control part 220 is provided with four cylindrical control buttons 221 (control elements) for pushing control. The individual control buttons 221 have identifying marks such as "○" (circle), "×" (cross), "△" (triangle) and "□" (quadrangle) on their tops, in order to easily identify the individual control buttons 221. The functions of the second control part 220 are set by the game program recorded upon the optical disc 411, and the individual control buttons 221 may be allocated functions that change the state of the game characters, for example. For example, the control buttons 221 may be allocated functions for moving the left arm, right arm, left leg and right leg of the character.

The third and fourth control parts 230 and 240 of the controller have nearly the same structure, and both are provided with two control buttons 231 and 241 (control elements) for pushing control, arranged above and below. The functions of these third and fourth control parts 230 and 240 are also set by the game program recorded on the optical disc, and may be allocated functions for making the game characters do special actions, for example.

Moreover, two joy sticks 251 for performing analog operation are provided upon the unit body 201 shown in Fig. 7. The joy sticks 251 can be switched and used instead of the first and second control parts 210 and 220 described above. This switching is performed by means of an analog selection switch 252 provided upon the unit body 201. When the joy sticks 251 are selected, a display lamp 253 provided on the unit body 201 lights, indicating the state wherein the joy sticks 251 are selected.

It is to be noted that on unit body 201 there are also provided a start switch 254 for starting the game and a select switch 255 for selecting the degree of difficulty or the like at the start of a game, and the like.

The controller 200 shown in Fig. 7 is held by the left hand and the right hand of the player and is operated by the other fingers, and in particular the thumbs of the player are able to operate most of the buttons on the top surface of the controller.

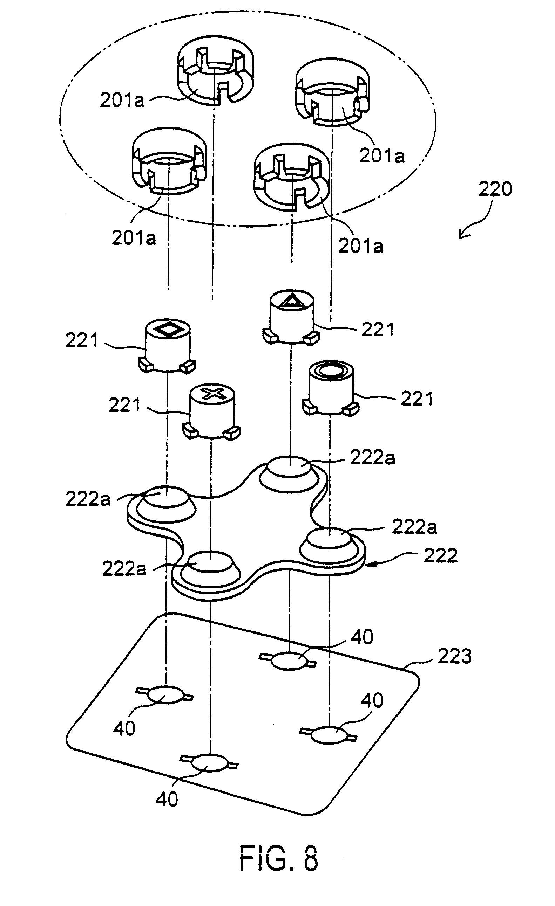

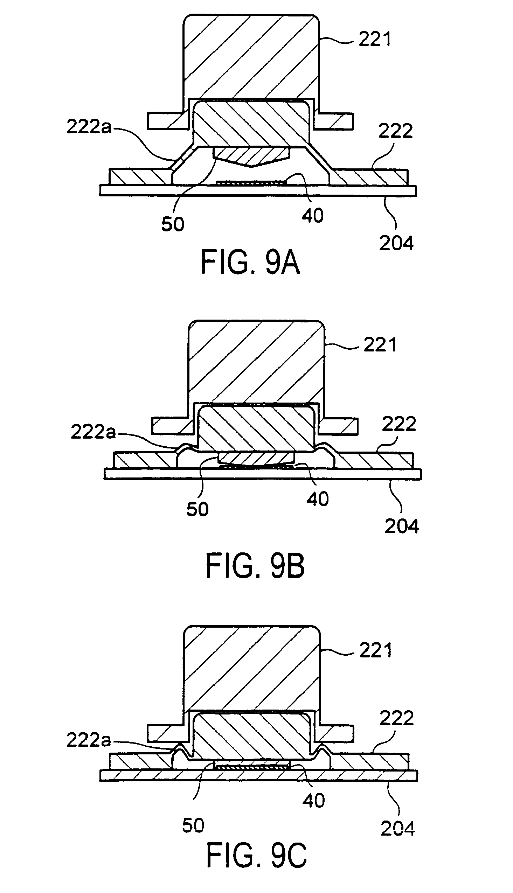

Fig. 8 and Figs. 9A-9C are, respectively, an exploded perspective view and cross-sectional views showing the second control part of the controller.

As shown in Fig. 8, the second control part 220 includes four control buttons 221 which serve as the control elements, an elastic body 222, and a sheet member 223 provided with resistors 40. The individual control buttons 221 are inserted from behind through insertion holes 201 a formed on the upper surface of the unit body 201. The control buttons 221 inserted into the insertion holes 201a are able to move freely in the axial direction.

The elastic body 222 is made of insulating rubber or the like and has elastic areas 222a which protrude upward, and the lower ends of the control buttons 221 are supported upon the upper walls of the elastic areas 222a. When the control buttons 221 are pressed, the inclined-surface portions of these elastic areas 222a flex so that the upper walls move together with the control buttons 221.

On the other hand, when the pushing pressure on the control buttons 221 is released, the flexed inclined-surface portions of elastic areas 222a elastically return to their original shape, pushing up the control buttons 221. The elastic body 222 functions as a spring means whereby control buttons 221 which had been pushed in by a pushing action are returned to their original positions. As shown in 9A-9C, conducting members 50 are attached to the rear surface of the elastic body 222.

The sheet member 223 consists of a membrane or other thin sheet material which has flexibility and insulating properties. Resistors 40 are provided in appropriate locations on this sheet member 223 and these resistors 40 and conducting member 50 are each disposed such that they face one of the control buttons 221 via the elastic body 222.

The resistors 40 and conducting members 50 form pressure-sensitive devices. These pressure-sensitive devices consisting of resistors 40 and conducting members 50 have resistance values that vary depending on the pushing pressure received from the control buttons 221.

To describe this in more detail, as shown in Fig. 9A-9C, the second control part 220 is provided with control buttons 221 as control elements, an elastic body 222, conducting members 50 and resistors 40. Each conducting member 50 may be made of conductive rubber which has elasticity, for example, and has a conical shape with its center as a vertex. The conducting members 50 are adhered to the inside of the top surface of the elastic areas 222a formed in the elastic body 222.

In addition, the resistors 40 may be provided on an internal board 204, for example, opposite the conducting members 50, so that the conducting members 50 come into contact with resistors 40 together with the pushing action of the control buttons 221. The conducting member 50 deforms, depending on the pushing force on the control button 221 (namely the contact pressure with the resistor 40), so as shown in Fig. 9B and 9C, the surface area in contact with the resistor 40 varies depending on the pressure.

To wit, when the pressing force on the control button 221 is weak, as shown in Fig. 9B, only the area near the conical tip of the conducting member 50 is in contact. As the pressing force on the control button 221 becomes stronger, the tip of the conducting member 50 deforms gradually so the surface area in contact expands.

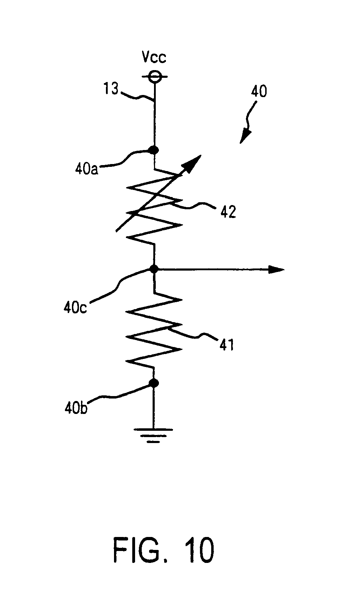

Fig. 10 is a diagram showing an equivalent circuit for a pressure-sensitive device consisting of a resistor 40 and conducting member 50. As shown in this diagram, the pressure-sensitive device is inserted in series in a power supply line 13, where the voltage $V_{cc}$ is applied between the electrodes 40a and 40b. As shown in this diagram, the pressure-sensitive device is divided into a variable resistor 42 that has the relatively small resistance value of the conducting member 50 and a fixed resistor 41 that has the relatively large resistance value of the resistor 40. Among these, the portion of the variable resistor 42 is equivalent to the portion of resistance in the contact between the resistor 40 and the conducting member 50, so the resistance value of the pressure-sensitive device varies depending on the surface area of contact with the conducting member 50.

When the conducting member 50 comes into contact with the resistor 40, in the portion of contact, the conducting member 50 becomes a bridge instead of the resistor 40 and a current flows, so the resistance value becomes smaller in the portion of contact. Therefore, the greater the surface area of contact between the resistor 40 and conducting member 50, the lower the resistance value of the pressure-sensitive device becomes. In this manner, the entire pressure-sensitive device can be understood to be a variable resistor. It is to be noted that Figs. 9A-9C show only the contact portion between the conducting member 50 and the resistor 40 which forms the variable resistor 42 of Fig. 10, but fixed resistor of Fig. 10 is omitted from Figs. 9A-9C.

In the preferred embodiment, an output terminal is provided near the boundary between variable resistor 42 and fixed resistor 41, namely near the intermediate point of the resistors 40, and thus a voltage stepped down from the applied voltage $V_{cc}$ by the amount the variable resistance is extracted as an analog signal corresponding to the pushing pressure by the user on the control button 221.

First, since a voltage is applied to the resistor 40 when the power is turned on, even if the control button 221 is not pressed by the user, a fixed analog signal (voltage) $V_{min}$ is provided as the output from the output terminal 40c. Next, even if the control button 221 is pressed, the resistance value of this resistor 40 does not change until the conducting member 50 contacts the resistor 40, so the output from the resistor 40 remains unchanged at $V_{min}$.

If the control button 221 is pushed further and the conducting member 50 comes into contact with the resistor 40, the surface area of contact between the conducting member 50 and the resistor 40 increases in response to the pushing pressure on the control button 221, and thus the resistance of the resistor 40 is reduced so the analog signal (voltage) output from the output terminal 40c of the resistor 40 increases. Furthermore, the analog signal (voltage) output from the output terminal 40c of the resistor 40 reaches the maximum $V_{max}$ when the conducting member 50 is most deformed.

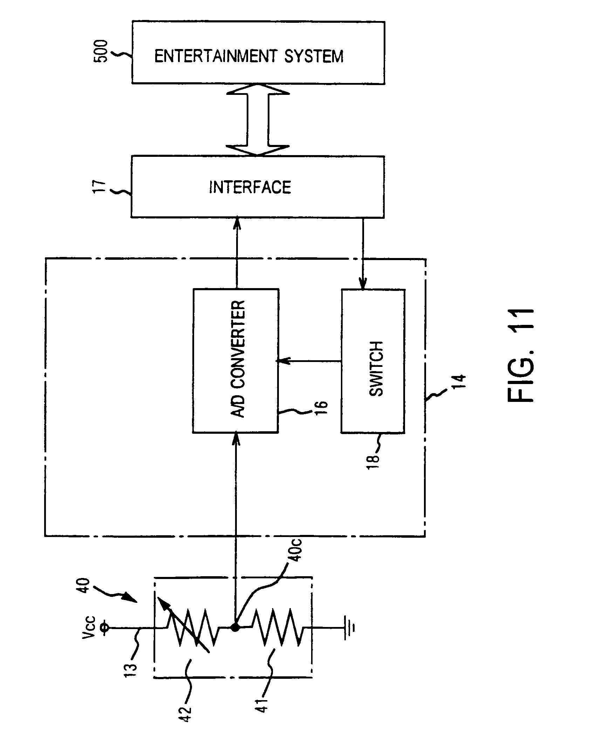

Fig. 11 is a block diagram showing the main parts of the controller 200.

An MPU 14 mounted on the internal board of the controller 200 is provided with a switch 18, an A/D converter 16. The analog signal (voltage) output from the output terminal 40c of the resistor 40 is provided as input to the A/D converter 16 and is converted to a digital signal.

The digital signal output from the A/D converter 16 is sent via an interface 17 provided upon the internal board of the controller 200 to the entertainment system 500 and the actions of game characters and the like are executed based on this digital signal.

Changes in the level of the analog signal output from the output terminal 40c of the resistor 40 correspond to changes in the pushing pressure received from the control button 221 (control element) as described above. Therefore, the digital signal outputted from the A/D converter 16 corresponds to the pushing pressure on the control button 221 (control element) from the user. If the actions of the game characters and the like are controlled based on the digital signal that has such a relationship with the pushing pressure from the user, it is possible to achieve smoother and more analog-like action than with control based on a binary digital signal based only on zeroes and ones.

The configuration is such that the switch 18 is controlled by a control signal sent from the entertainment system 500 based on a game program recorded on an optical disc 411. When a game program recorded on optical disc is executed by the entertainment system 500, depending on the content of the game program, a control signal is provided as output to specify whether the A/D converter 16 is to function as a means of providing as output a multi-valued digital signal, or as a means of providing a binary digital signal. Based on this control signal, the switch 18 is switched to select the function of the A/D converter 16.

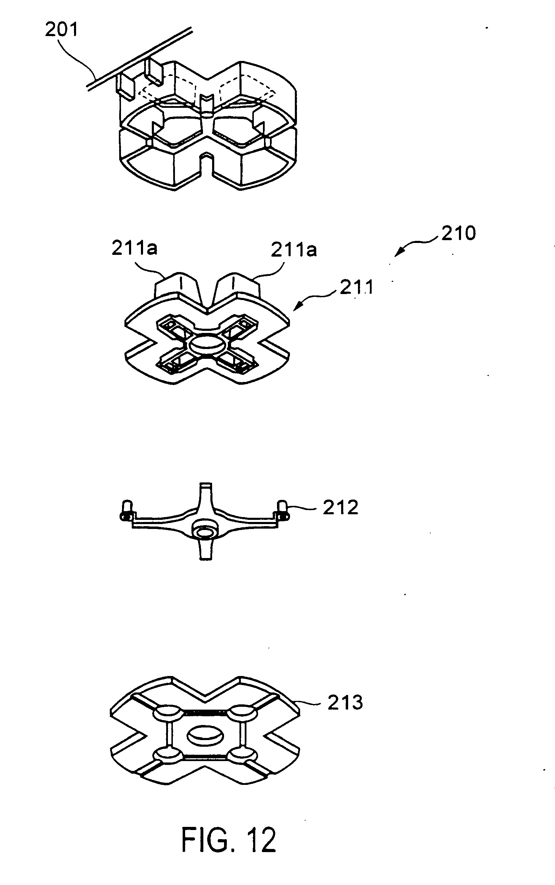

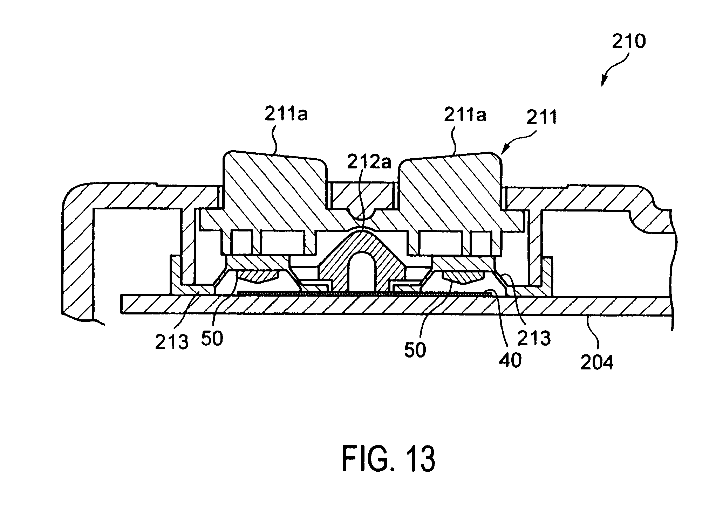

Figs. 12 and 13 show an example of the configuration of the first control part of the controller.

As shown in Fig. 12, the first control part 210 includes a cruciform control unit 211, a spacer 212 that positions this control unit 211, and an elastic body 213 that elastically supports the control unit 211. Moreover, as shown in Fig. 12, a conducting member 50 is attached to the rear surface of the elastic body 213, and the configuration is such that resistors 40 are disposed at the positions facing the individual control keys 211a (control elements) of the control unit 211 via the elastic body 213.

The overall structure of the first control part 210 has already been made public knowledge in the publication of unexamined Japanese patent application No. JP-A-H8-163672. The control unit 211 uses a hemispherical projection 212a formed in the center of the spacer 212 as a fulcrum, and the individual control keys 211a (control elements) are assembled such that they can push on the resistor 40 side (see Fig. 13).

Conducting members 50 are adhered to the inside of the top surface of the elastic body 213 in positions corresponding to the individual control keys 211 a (control elements) of the cruciform control unit 211. In addition, the resistors 40 with a single structure are disposed such that they face the individual conducting members 50.

When the individual control keys 211 a which are control elements are pushed, the pushing pressure acts via the elastic body 213 on the pressure-sensitive devices consisting of a conducting member 50 and resistor 40, so that its electrical resistance value varies on the magnitude of the pushing pressure.

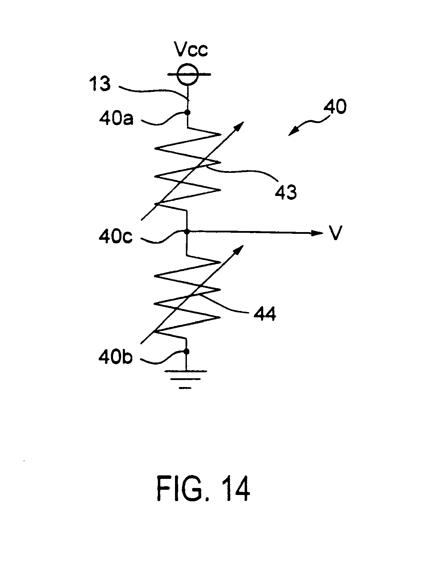

Fig. 14 is a diagram showing the circuit configuration of the resistor. As shown in this diagram, the resistor 40 is inserted in series in a power supply line 13, where a voltage is applied between the electrodes 40a and 40b. The resistance of this resistor 40 is illustrated schematically, as shown in this diagram, the resistor 40 is divided into first and second variable resistors 43 and 44.

Among these, the portion of the first variable resistor 43 is in contact, respectively, with the conducting member 50 that moves together with the control key (up-directional key) 211 a for moving the character in the up direction, and with the conducting member 50 that moves together with the control key (left-directional key) 211a for moving the character in the left direction, so its resistance value varies depending on the surface area in contact with these conducting members 50.

In addition, the portion of the second variable resistor 44 is in contact, respectively, with the conducting member 50 that moves together with the control key (down-directional key) 211a for moving the character in the down direction, and with the conducting member 50 that moves together with the control key (right-directional key) 211a for moving the character in the right direction, so its resistance value varies depending on the surface area in contact with these conducting members 50.

Moreover, an output terminal 40c is provided intermediate between the variable resistors 43 and 44, and an analog signal corresponding to the pushing pressure on the individual control keys 211 a (control elements) is provided as output from this output terminal 40c.

The output from the output terminal 40c can be calculated from the ratio of the split in resistance value of the first and second variable resistors 43 and 44. For example, if R1 is the resistance value of the first variable resistor 43, R2 is the resistance value of the second variable resistor 44 and $V_{cc}$ is the power supply voltage, then the output voltage V appearing at the output terminal 40c can be expressed by the following equation.

$$V = V_{cc} \text{ x } R2/(R1+R2)$$

Therefore, when the resistance value of the first variable resistor 43 decreases, the output voltage increases, but when the resistance value of the second variable resistor 44 decreases, the output voltage also decreases.

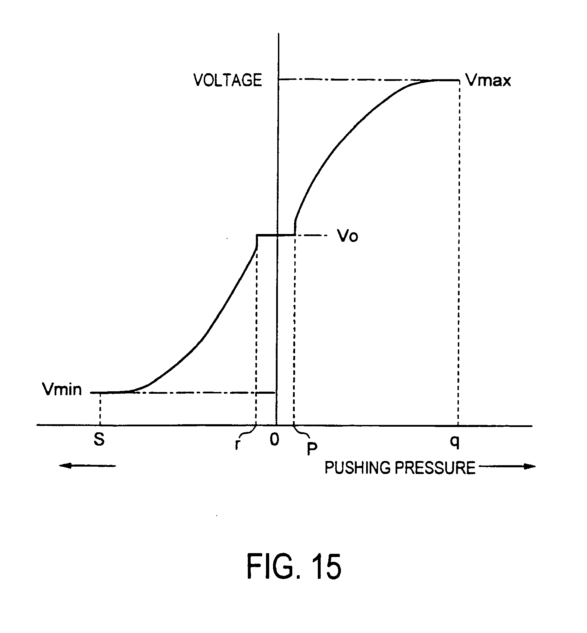

Fig. 15 is a graph showing the characters of the analog signal (voltage) output from the output terminal of the resistor.

First, since a voltage is applied to the resistor 40 when the power is turned on, even if the individual control keys 211 a of the control unit 211 are not pressed, a fixed analog signal (voltage) $V_0$ is provided as output from the output terminal 40c (at position 0 in the graph).

Next, even if one of the individual control keys 211 a is pressed, the resistance value of this resistor 40 does not change until the conducting member 50 contacts the resistor 40, and the output from the resistor 40 remains unchanged at $V_0$.

Furthermore, if the up-directional key or left-directional key is pushed until the conducting member 50 comes into contact with the first variable resistor 43 portion of the resistor 40 (at position p in the graph), thereafter the surface area of contact between the conducting member 50 and the first variable resistor 43 portion increases in response to the pushing pressure on the control key 211 a (control elements), and thus the resistance of that portion is reduced so the analog signal (voltage) output from the output terminal 40c of the resistor 40 increases. Furthermore, the analog signal (voltage) output from the output terminal 40c of the resistor 40 reaches the maximum $V_{max}$ when the conducting member 50 is most deformed (at position q in the graph).

On the other hand, if the down-directional key or right-directional key is pushed until the conducting member 50 comes into contact with the second variable resistor 44 portion of the resistor 40 (at position r in the graph), thereafter the surface area of contact between the conducting member 50 and the second variable resistor 44 portion increases in response to the pushing pressure on the control key 211 a (control elements), and thus the resistance of that portion is reduced, and as a result, the analog signal (voltage) output from the output terminal 40c of the resistor 40 decreases.

Furthermore, the analog signal (voltage) output from the output terminal 40c of the resistor 40 reaches the minimum $V_{min}$ when the conducting member 50 is most deformed (at position s in the graph).

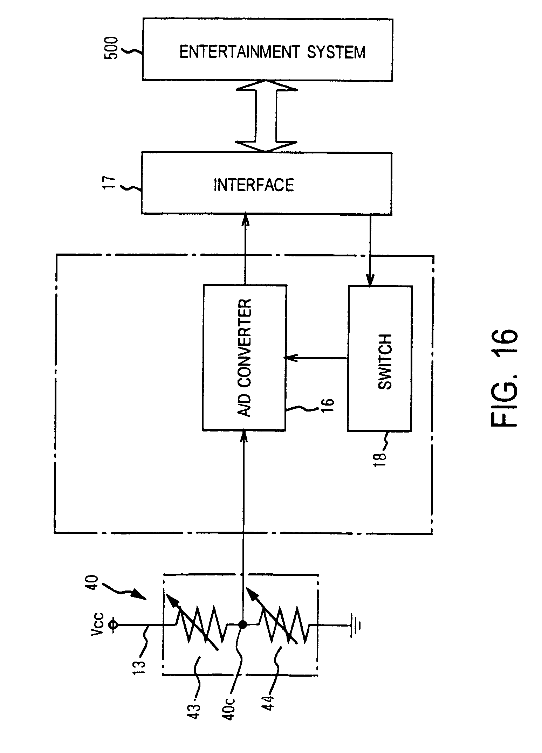

As shown in Fig. 16, the analog signal (voltage) output from the output terminal 40c of the resistor 40 is provided as input to an A/D converter 16 and converted to a digital signal. It is to be noted that the function of the A/D converter 16 shown in Fig. 16 is as described previously based on Fig. 11, so a detailed description shall be omitted here.

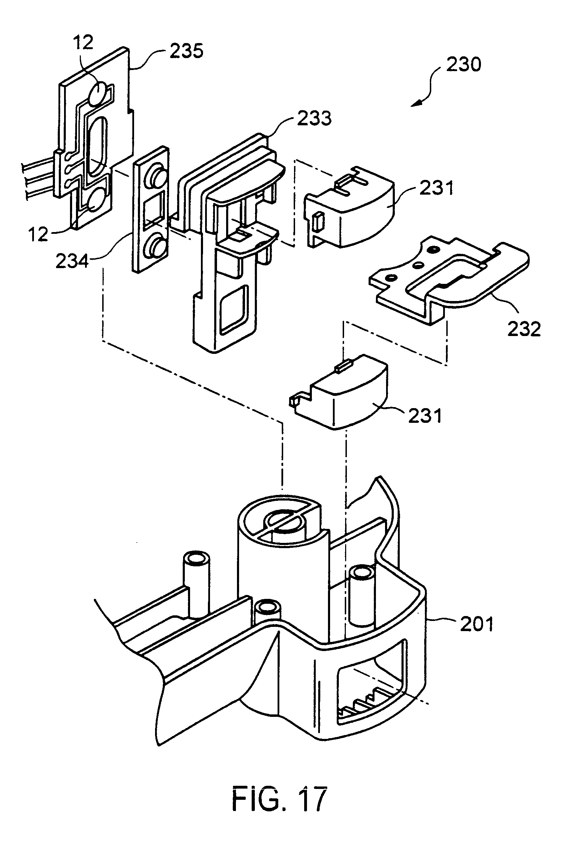

Fig. 17 is an exploded perspective view of the third control part of the controller.

The third control part 230 consists of two control buttons 231, a spacer 232 for positioning these control buttons 231 within the interior of the controller 200, a holder 233 that supports these control buttons 231, an elastic body 234 and an internal board 235, having a structure wherein resistors 40 are attached to appropriate locations upon the internal board 235 and conducting members 50 are attached to the rear surface of the elastic body 234.

The overall structure of the third control part 230 also already has been made public knowledge in the publication of unexamined Japanese patent application No. JP-AH8-163672. The individual control buttons 231, however, can be pushed in while being guided by the spacer 232, the pushing pressure when buttons 231 are pressed, acts via the elastic body 234 on the pressure-sensitive device consisting of conducting member 50 and resistor 40. The electrical resistance value of the pressure-sensitive device varies depending on the magnitude of the pushing pressure it receives.

It is noted that the fourth control part 240 has the same structure as that of the third control part 230 described above.

In the above description, a flowchart for projectile shooting is shown in Figure 4. This program can be provided either in a form recorded individually on a recording medium such as an optical disk, or in a form recorded on said recording medium together with game software as part of the game software. The projectile shooting program is activated on entertainment system 500 and executed on its CPU.

Here, the significance of the projectile shooting program being provided recorded individually on a recording medium is that it is made available previously as a library for software development. As is well known, in developing software it takes an enormous amount of time to write all the functions.

But if the software functions are broken up into single functions, then many functions will be included that are used in common by various software, such as the function of causing objects to move.

Thus functions that can be used in common such as this embodiment can be provided to software manufacturers as library programs. By having others provide such common functions as programs, software manufacturers can concentrate on just producing the essential part of their software other than its common-function parts.

In the foregoing, an embodiment of the present invention has been described. However, alternative embodiments can also be provided for this invention. In the embodiment, the pressure sensing value pressed by the user is used as is. However, in order to compensate for differences in users' physical strength or nervous reactions, the maximum value of a user's pressure sensing value can be corrected to the maximum game pressure sensing value set by the program, with intermediate values corrected proportionately. Such compensation is done by preparing a compensation table. Also, a user's pressure sensing value can be corrected by a well known function and used as the game pressure sensing value. In addition, the maximum value of a user's pressure sensing value rate of change can be corrected to a program-set maximum game pressure sensing value rate of change, with intermediate values corrected proportionately. For these specific techniques, see the present inventors' Japanese patent application H2000-40257 and the corresponding PCT/JP / (Applicant's file reference No. SC00097WO00).

With this invention, a method for using a controller is provided in which the game's value is enhanced without eliminating the rapid-fire function.

This invention can improve the user interface, making it even easier to use than the conventional rapid firing with an on-off switch, and enhancing the game's value over using a dedicated rapid-fire switch.

## Claims

1. A recording medium on which is recorded a shooting game software program that can be read and executed by a computer (500), said program being operable to process as commands a pressure-sensitive output from a controller (200) which is connectable to the computer and has a pressure sensing means (220), wherein
said computer is operable under control of said software program to shoot projectiles in a screen of the computer in a number that corresponds to said output of said controller by referring to a table in which a number of projectiles to be shot is set in association with a pressure sensing value detected by said pressure sensing means;
wherein when the game program is executed by the computer, a control signal is provided as output to specify whether an A/D converter, which converts an output from the pressure sensing means into a digital signal, is to provide a binary digital output or a multi-valued digital output signal.

2. The recording medium as described in claim 1, wherein a number of said projectiles to be shot per unit time is varied according to a rate of change per unit time of an output value of said controller.

3. The recording medium as described in claim 1, wherein the number of said projectiles to be shot per unit time is varied according to the size of the output value of said controller.

4. A method for executing shooting games on a computer (500) by using a pressure-sensitive controller (200), comprising the steps of
detecting a pressure by a user in a shooting operation, by a pressure sensing means (220) provided on the controller,
determining a number of projectiles to be shot in accordance with said pressure in the shooting operation by referring to a table in which a number of projectiles to be shot is set in association with a pressure sensing value detected by said pressure sensing means; and
shooting a determined number of projectiles to be shot by a user character on a monitor at the computer;
wherein when the game program is executed by the computer, a control signal is proved as output to specify whether an A/D converter, which converts an output from the pressure sensing means into a digital signal is to provide a binary digital output or a multi-valued digital output signal.

5. The method as described in claim 4, comprising the step of deciding whether an enemy character has been hit.

6. The method as described in claim 4 or claim 5, wherein in the step in which the number of projectiles to be shot is determined in accordance with the pressure in the shooting operation detected by said pressure sensing means, the number of projectiles to be shot is determined in accordance with a rate of change per unit time of the pressure in the shooting operation.

7. The method as described in claim 4 or claim 5, wherein in the step in which the number of projectiles to be shot is determined in accordance with the pressure in the shooting operation detected by said pressure sensing means, the number of projectiles to be shot is determined in accordance with an amount of the pressure in the shooting operation.

8. The method described in claim 5, wherein in the step in which the number of projectiles to be shot is determined in accordance with the pressure in the shooting operation detected by said pressure sensing means,
the number of projectiles to be shot is determined in accordance with a rate of change of the amount *of* the pressure in the shooting operation in a previous time and the amount of the pressure in the shooting operation at the current time.

9. A computer (500) configured to execute a shooting game in an entertainment system comprising:

a controller (200) having a pressure sensing means (220) which is configured to detect an operation pressure in a shooting operation by a player playing the shooting game
a means configured to determine a number of projectiles to be shot in accordance with the operation pressure in the shooting operation by referring to a table in which a number of projectiles to be shot is set in association with a pressure sensing value detected by said pressure sensing means; and
a means configured to shoot the determined number of projectiles to be shot by the player character on a monitor of the computer;
wherein when the game program is executed by the computer, the computer is configured to provide a control signal as output to specify whether an A/D converter, which converts an output from the pressure sensing means into a digital signal, is to provide a binary digital output or a multi-valued digital output signal.

10. The computer as described in claim 9, comprising:

a means configured to decide whether an enemy character has been hit.

11. The computer as described in claim 9 or claim 10, wherein the means which is configured to determine the number of projectiles to be shot in accordance with the pressure of the shooting operation detected by said pressure sensing means
is also configured to decide the number of projectiles to be shot in accordance with a rate of change per unit lime of said operation pressure of the shooting operation.

12. The computer as described in claim 9 or claim 10, wherein the means which is configured to determine the number of projectiles to be shot in accordance with the operation pressure in the shooting operation, detected by said pressure sensing means, is also configured to decide the number of projectiles to be shot in accordance with an amount of the operation pressure of the shooting operation.

13. The computer as described in claim 10, wherein the means which is configured to determine the number of projectiles to be shot in accordance with the pressure of the shooting operation detected by said pressure sensing means
is also configured to decide the number of projectiles to be shot in accordance with a rate of change of the size of the operation pressure in the shooting operation at the previous rime and an amount of the operation pressure at the current time.

**Patentansprüche**

1. Aufzeiclmungsmedium, auf welchem ein Schieß-Spiel-Software-Programm aufgezeichnet ist, welches durch einen Computer (500) gelesen und ausgeführt werden kann, wobei das Programm betriebsfähig ist, als Befehle ein drucksensitives Ausgangssignal von einer Steuerung (200) zu verarbeiten, welche mit dem Computer verbunden werden kann, und welche eine druck-sensitive Einrichtung (220) hat, wobei
der Computer unter der Steuerung des Software-Programms betriebsfähig ist, um Projektile in einem Bildschirm des Computers in einer Anzahl zu schießen, welche dem Ausgangssignal der Steuerung entspricht, indem auf eine Tabelle bezuggenommen wird, in welcher eine Anzahl von Projektilen, welche zu schießen sind, in Verbindung mit einem druck-sensitiven Wert, der durch die druck-sensitive Einrichtung erfasst wird, gesetzt ist;
wobei, wenn das Spielprogramm durch den Computer ausgeführt wird, ein Steuersignal als Ausgangssignal bereitgestellt wird, um zu spezifizieren, ob ein A/D-Umsetzer, der ein Ausgangssignal von der druck-sensitiven Einrichtung in ein Digitalsignal umsetzt, da ist, ein binäres digitales Ausgangssignal oder ein digitales Multiwert-Ausgangssignal bereitzustellen.

2. Aufzeichnungsmedium nach Anspruch 1, wobei eine Anzahl der Projektile, welche pro Zeiteinheit zu schießen sind, gemäß einer Änderungsrate pro Zeiteinheit eines Ausgangswerts der Steuerung variiert wird.

3. Aufzeichnungsmedium nach Anspruch 1, wobei die Anzahl der zu schließenden Projektile pro Zeiteinheit gemäß der Größe des Ausgangswerts der Steuerung variiert wird.

4. Verfahren zum Ausführen von Schieß-Spielen auf einem Computer (500) unter Verwendung einer druck-sensitiven Steuerung (200), welches folgende Schritte umfasst:

Erfassen eines Drucks durch einen Benutzer bei einem Schießbetrieb durch eine druck-sensitive Einrichtung (220), welche auf der Steuerung vorgesehen ist,

Bestimmen einer Anzahl von zu schießenden Projektilen gemäß dem Druck beim Schießbetrieb unter Bezugnahme auf eine Tabelle, in welcher eine Anzahl von zu schießenden Projektilen in Verbindung mit einem druck-sensitiven Wert gesetzt ist, der durch die druck-sensitive Einrichtung erfasst wird; und

Schießen einer bestimmten Anzahl von zu schießenden Projektilen durch ein Benutzersymbol auf einem Monitor des Computers,

wobei, wenn das Spielprogramm durch den Computer ausgeführt wird, ein Steuersignal als Ausgangssignal bereitgestellt wird, um zu spezifizieren, ob ein A/D-Umsetzer, der ein Ausgangssignal von der druck-sensitiven Einrichtung in ein Digitalsignal umsetzt, da ist, ein binäres digitales Ausgangssignal oder ein digitales Multiwert-Ausgangssignal bereitzustellen.

5. Verfahren nach Anspruch 4, welches den Schritt umfasst, zu entscheiden, ob ein Feindsymbol getroffen wurde.

6. Verfahren nach Anspruch 4 oder 5, wobei im Schritt, bei dem die Anzahl von zu schießenden Projektilen gemäß dem Druck beim Schießbetrieb bestimmt wird, der durch die druck-sensitive Einrichtung erfasst wird, die Anzahl von zu schießenden Projektilen gemäß einer Änderungsrate pro Zeiteinheit des Drucks beim Schießbetrieb bestimmt wird.

7. Verfahren nach Anspruch 4 oder 5, wobei in dem Schritt, bei dem die Anzahl von zu schießenden Projektilen gemäß dem Druck beim Schießbetrieb bestimmt wird, der durch die druck-sensitive Einrichtung erfasst wird, die Anzahl von zu schießenden Projektilen gemäß einer Höhe des Drucks beim Schießbetrieb bestimmt wird.

8. Verfahren nach Anspruch 5, wobei bei dem Schritt, bei dem die Anzahl von zu schießenden Projektilen gemäß dem Druck beim Schießbetrieb bestimmt wird, der durch die druck-sensitive Einrichtung erfasst wird, die Anzahl von zu schießenden Projektilen gemäß einer Änderungsrate der Höhe des Drucks beim Schießbetrieb in einem vorherigen Zeitpunkt und der Höhe des Drucks beim Schießbetrieb im aktuellen Zeitpunkt bestimmt wird.

9. Computer (500), der konfiguriert ist, um ein Schieß-Spiel in einem Unterhaltungssystem auszuführen, der umfasst:

eine Steuerung (200), welche eine druck-sensitive Einrichtung (220) hat, welche konfiguriert ist, einen Betriebsdruck beim Schießbetrieb durch einen Spieler, welcher das Schießspiel spielt, zu erfassen,

eine Einrichtung, die konfiguriert ist, um eine Anzahl von zu schießenden Projektilen gemäß dem Betriebsdruck beim Schießbetrieb unter Bezugnahme auf eine Tabelle zu bestimmen, in welcher eine Anzahl von zu schießenden Projektilen in Verbindung mit einem druck-sensitiven Wert, der durch die druck-sensitive Einrichtung erfasst wird, gesetzt ist; und

eine Einrichtung, die konfiguriert ist, um die bestimmte Anzahl von zu schießenden Projektilen durch das Spielsymbol auf einem Monitor des Computers zu bestimmen;

wobei, wenn das Spielprogramm durch den Computer ausgeführt wird, der Computer konfiguriert ist, um ein Steuersignal als Ausgangssignal bereitzustellen, um zu spezifizieren, ob ein A/D-Umsetzer, welcher ein Ausgangssignal von der druck-sensitiven Einrichtung in Digitalsignal umsetzt, da ist, um ein binäres digitales Ausgangssignal oder ein digitales Multiwert-Ausgangssignal bereitzustellen.

10. Computer nach Anspruch 9, der umfasst:

eine Einrichtung, welche konfiguriert ist, um zu entscheiden, ob ein Feindsymbol getroffen wurde.

11. Computer nach Anspruch 9 oder 10, wobei die Einrichtung, welche konfiguriert ist, um die Anzahl von zu schießenden Projektilen zu bestimmen, welche gemäß dem Druck des Schießbetriebs geschossen werden, welcher durch die druck-sensitive Einrichtung erfasst wird, konfiguriert ist, die Anzahl von zu schießenden Projektilen gemäß einer Änderungsrate pro Einheitszeit des Betriebsdrucks des Schießbetriebs zu bestimmen.

12. Computer nach Anspruch 9 oder 10, wobei die Einrichtung, welche konfiguriert ist, um die Anzahl von zu schießenden Projektilen gemäß dem Betriebsdruck beim Schießbetrieb zu bestimmen, der durch die druck-sensitive Einrichtung erfasst wird, konfiguriert ist, um die Anzahl von zu schießenden Projektilen gemäß einer Höhe des Betriebsdrucks des Schießbetriebs zu bestimmen.

13. Computer nach Anspruch 10, wobei die Einrichtung, welche konfiguriert ist, um die Anzahl von zu schieβenden Projektilen gemäβ dem Druck des Schieβbetriebs, der durch die druck-sensitive Einrichtung erfasst wird, zu bestimmen,

konfiguriert ist, die Anzahl von zu schieβenden Projektilen gemäβ einer Änderungsrate der Höhe des Betriebsdrucks beim Schieβbetrieb in einem vorherigen Zeitpunkt und einer Höhe des Betriebsdrucks im aktuellen Zeitpunkt zu bestimmen.

**Revendications**

1.  Support d'enregistrement sur lequel est enregistré un programme de logiciel de jeu de tir qui peut être lu et exécuté par un processeur (500), ledit programme étant utilisable pour traiter comme des instructions une sortie sensible à la pression provenant d'un régisseur (200) qui peut se connecter au processeur et possède un moyen (220) de détection de pression, dans lequel ledit processeur est utilisable sous les ordres dudit logiciel pour tirer des projectiles dans un écran du processeur en un nombre qui correspond à ladite sortie dudit régisseur en se référant à une table dans laquelle un nombre de projectiles à tirer est fixé en association avec une valeur de détection de pression détectée par ledit moyen de détection de pression ;

    dans lequel, lorsque le programme de jeu est exécuté par le processeur, un signal de commande est fourni comme sortie pour spécifier si un convertisseur d'analogique en numérique (A/D), qui convertit une sortie du moyen de détection de pression en un signal numérique, doit fournir une sortie numérique binaire ou un signal de sortie numérique à valeurs multiples.

2.  Support d'enregistrement selon la revendication 1, dans lequel le nombre desdits projectiles à tirer par unité de temps varie en fonction du nombre de changements par unité de temps d'une valeur de sortie dudit régisseur.

3.  Support d'enregistrement selon la revendication 1, dans lequel le nombre desdits projectiles à tirer par unité de temps varie en fonction de la grandeur de la valeur de sortie dudit régisseur.

4.  Procédé d'exécution de jeux de tir sur un processeur (500) en utilisant un régisseur (200) sensible à la pression, comprenant les étapes :

    de détection, à l'aide d'un moyen (220) de détection de pression prévu sur le régisseur, d'une pression exercée par un utilisateur dans une opération de tir ;
    de détermination d'un nombre de projectiles à tirer en fonction de ladite pression dans l'opération de tir en se référant à une table dans laquelle un nombre de projectiles à tirer est fixé en association avec une valeur de détection de pression détectée par ledit moyen de détection de pression ; et

    de tir, par un personnage d'utilisateur sur un écran au niveau du processeur, d'un nombre déterminé de projectiles à tirer ;

    dans lequel, lorsque le programme de jeu est exécuté par le processeur, un signal de commande est fourni comme sortie pour spécifier si un convertisseur A/D, qui convertit une sortie du moyen de détection de pression en un signal numérique, doit fournir une sortie numérique binaire ou un signal de sortie numérique à valeurs multiples.

5.  Procédé selon la revendication 4, comprenant l'étape consistant à décider si un personnage ennemi a été touché.

6.  Procédé selon la revendication 4 ou la revendication 5, dans lequel, à l'étape dans laquelle le nombre de projectiles à tirer est déterminé en fonction de la pression dans l'opération de tir détectée par ledit moyen de détection de pression, le nombre de projectiles à tirer est déterminé en fonction du nombre de changements par unité de temps de la pression dans l'opération de tir.

7.  Procédé selon la revendication 4 ou la revendication 5, dans lequel, à l'étape dans laquelle le nombre de projectiles à tirer est déterminé en fonction de la pression dans l'opération de tir détectée par ledit moyen de détection de pression, le nombre de projectiles à tirer est déterminé en fonction de la valeur de la pression dans l'opération de tir.

8.  Procédé selon la revendication 5, dans lequel, à l'étape dans laquelle le nombre de projectiles à tirer est déterminé en fonction de la pression dans l'opération de tir détectée par ledit moyen de détection de pression,

    le nombre de projectiles à tirer est déterminé en fonction du nombre de changements de la valeur de la pression dans l'opération de tir à un moment antérieur et de la valeur de la pression dans l'opération de tir au moment présent.

9.  Processeur (500) constitué pour exécuter un jeu de tir dans un système de divertissement comprenant :

    un régisseur (200) possédant un moyen (220) de détection de pression qui est constitué pour détecter une pression de mise en oeuvre dans une opération de tir par un joueur jouant au jeu de tir ;
    un moyen constitué pour déterminer un nombre de projectiles à tirer en fonction de la pression de mise en oeuvre dans l'opération de tir en se référant à une table dans laquelle un nombre de projectiles à tirer est fixé en association avec une valeur de détection de pression détectée par ledit moyen de détection de pression ; et
un moyen constitué pour tirer le nombre déterminé de projectiles à tirer par le personnage du joueur sur un écran du processeur,
dans lequel, lorsque le programme de jeu est exécuté par le processeur, le processeur est constitué pour fournir une sortie pour spécifier si un convertisseur A/D, qui convertit la sortie du moyen de détection de pression en un signal numérique, doit fournir une sortie numérique binaire ou un signal de sortie numérique à valeurs multiples.

10. Processeur selon la revendication 9, comprenant un moyen constitué pour décider si un personnage ennemi a été touché.

11. Processeur selon la revendication 9 ou la revendication 10, dans lequel le moyen, qui est constitué pour déterminer le nombre de projectiles à tirer en fonction de la pression de l'opération de tir détectée par ledit moyen de détection de pression,
est aussi constitué pour décider du nombre de projectiles à tirer en fonction du nombre de changements par unité de temps de ladite pression de mise en oeuvre de l'opération de tir.

12. Processeur selon la revendication 9 ou la revendication 10, dans lequel le moyen, qui est constitué pour déterminer le nombre de projectiles à tirer en fonction de la pression de mise en oeuvre de l'opération de tir, détectée par ledit moyen de détection de pression,
est aussi constitué pour décider du nombre de projectiles à tirer en fonction de la valeur de la pression de mise en oeuvre de l'opération de tir.

13. Processeur selon la revendication 10, dans lequel le moyen, qui est constitué pour déterminer le nombre de projectiles à tirer en fonction de la pression de l'opération de tir détectée par ledit moyen de détection de pression,
est aussi constitué pour décider du nombre de projectiles à tirer en fonction du nombre de changements de la grandeur de la pression de mise en oeuvre dans l'opération de tir à un moment antérieur et de la valeur de la pression de mise en oeuvre au moment présent.

200 CONTROLLER

500 ENTERTAINMENT SYSTEM

408 T V

FIG. 1

FIG. 2

| PRESSURE SENSING VALUE | NUMBER Bt OF PROJECTILES TO BE SHOT |
|:---:|:---:|
| 0 | 0 |
| 1 | 1 |
| ¦ | ¦ |
| 2 5 5 | 2 5 5 |

# FIG. 3

START

OBTAIN DATA FROM CONTROLLER — S1

READ NUMBER Bt OF PROJECTILES TO BE SHOT — S2

DISPLAY PROJECTILE — S3

F = F + 1 — S4

F > 2 5 5 ? — S5  YES

NO

B = B + 1 — S6

B > B t ? — S7  YES

NO

MOVE PROJECTILE POSITION — S8

HIT? — S9  NO

YES

ENEMY? — S10  NO

YES

INCREMENT SCORE — S11

SUBTRACT PRESCRIBED NUMBER OF POINTS — S12

ENEMY HP < 0 ? — S13  NO

YES

VANISHING PROCESSING — S14

NO MORE ENEMIES? — S15  NO

YES

END

FIG. 4

17

FIG. 5

FIG. 6

FIG. 7

EP 1 246 674 B1

201a

201a

201a

220

201a

221

221

221

221

222a

222a

222a

222a

222

40

223

40

40

40

40

FIG. 8

221

222a

222

50

40

204

FIG. 9A

221

222a

222

50

40

204

FIG. 9B

221

222a

222

50

40

204

FIG. 9C

FIG. 10

FIG. 11

EP 1 246 674 B1

FIG. 12

EP 1 246 674 B1

FIG. 13

FIG. 14

FIG. 15

FIG. 16

FIG. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H1104743 B
- JP H11047448 B
- JP H11052898 B
- JP H11053082 B
- JP H11053571 B
- JP H11076615 B
- JP H140545 B
- EP 0952555 A
- US 5999084 A
- JP H8163672 A
- JP H200040257 B
- JP SC00097WO00 W